# EUROPEAN PATENT APPLICATION

(11) **EP 4 005 436 A1**
(43) Date of publication of application: **01.06.2022**
(21) Application number: 20189235.3
(22) Date of filing: 03.08.2020
(51) Int. Cl.: A47C 20/04, A47C 21/00, A47B 21/00, A47B 9/00, H02P 31/00, A47C 31/00

(54) **SPEED ADJUSTMENT CONTROL APPARATUS, ELECTRONIC LIFTING MECHANISM, AND ELECTRONIC MASSAGING MECHANISM**

(30) Priority: 10.04.2019 CN 201910286118
(71) Applicant: Zhejiang Jiecang Linear Motion Technology Co., Ltd, Shaoxing, Zhejiang 312500 (CN)
(72) Inventor: CHEN, Xueli, Shaoxing City, Zhejiang (CN); ZHANG, Zhekang, Shaoxing City, Zhejiang (CN); CHEN, Senyu, Shaoxing City (CN); ZHOU, Shaoping, Shaoxing City, zhejiang (CN)
(74) Representative: Lang, Christian

(57) **Abstract**

Disclosed are a speed-variable control arrangement, an electric lift mechanism, and an electric massaging mechanism. The speed-variable control arrangement includes an information processing module, an operation detecting module electrically connected to the operating unit, and a motor control module electrically connected to the motor, the operation detecting module and the motor control module being electrically connected to the information processing module; the operation detecting module detects an action variation quantity of the operating unit and transmits the detection result to the information processing module; the information processing module obtains a corresponding motor speed variation quantity based on the detection result and transmits the obtained motor speed variation quantity to the motor control module; and the motor control module changes the motor speed based on the motor speed variation quantity. As such, Speed control becomes more intuitive. As the speed control is not restricted by limited gear positions, continuous speed variation is achieved. Further, due to elimination of a speed selector switch that would require matched control and detection ports, the product structure is simplified.

## Description

### FIELD OF THE INVENTION

Embodiments of the present disclosure generally relate to variable-speed control technologies, and more particularly relate to variable-speed control arrangements, electric lift mechanisms, and electric massaging mechanisms.

### BACKGROUND OF THE INVENTION

Electric lift mechanisms such as electric lift tables, electric tatamis, electric sofas, and electric beds enable height adjustment to meet requirements of users and thus are comfortable in use, which is why they are increasingly applied in scenes such as offices, schools, home, and hospitals.

Electric platforms of existing electric lift mechanisms can only be lowered and raised at a fixed speed, the operating modes of which include: long-press lift, press lift, and one-touch auto-lift, etc. As lift platforms are applied in an increasingly wide array, different application scenarios have different speed requirements; and with constant advancement of technologies and processes, the lift speed of electric lift platforms increases from initially 10-40mm/s to above 100mm/s. In the context of the currently high speed or in a scenario of requiring a fast lift, a variable-speed lift operation enables one to accommodate a high acceleration upon actuation by speed control before the electric lift platform reaches the maximum speed. The variable-speed lift operation resembles a continuous speed variation and improves lift performance, realizing maximum exploitation of the performance.

Existing speed control technologies available in the market mostly perform speed control by a gear selector switch, a multi-gear toggle switch, or by defining different pushbuttons or different operations to correspond to different speeds, which, however, are not intuitive to operate. Besides, only limited gear positions can be arranged, which limits speed variation. Further, more control and detection ports are needed to match the gear positions, rendering a complex product structure.

### SUMMARY OF THE INVENTION

Embodiments of the present disclosure provide variable-speed control arrangements, electric lift mechanisms, and electric massaging mechanisms, which achieve a continuous speed variation and a simplified product structure

Embodiments of the present disclosure provide the following technical solution: a variable-speed control arrangement, comprising an operating unit and a control unit, the control unit including an information processing module, an operation detecting module electrically connected to the operating unit, and a motor control module electrically connected to the motor, the operation detecting module and the motor control module being electrically connected to the information processing module; the operation detecting module detects an action variation quantity of the operating unit and transmits the detection result to the information processing module; the information processing module obtains a corresponding motor speed variation quantity based on the detection result and transmits the obtained motor speed variation quantity to the motor control module; and the motor control module changes the motor speed based on the motor speed variation quantity .

Further, the operating unit comprises a first shell and a paddle provided on the first shell; the operation detecting module comprises a pressure sensor provided in a stressed zone of the paddle and/or an angle sensor provided on a follow-up surface of the paddle.

Further, the pressure sensor is a piezoelectric transducer; or, the pressure sensor is a piezoresistive transducer; or, the pressure sensor comprises a conductive elastic member, wherein deformation of the conductive elastic member results in a change to resistive value.

Further, the information processing module and the motor control module are integrated onto a first signal processing board, the first signal processing board being provided in the first shell and electrically connected to the pressure sensor.

Further, the operating unit comprises a second shell and a first rotating housing provided on the second shell; the operation detecting module comprises a magnetically inductive sensor and a magnet, wherein the magnetically inductive sensor is provided on the first rotating housing and rotatable with the first rotating housing, and the magnet is fixed in the second shell; or, the magnetically inductive sensor is fixed in the second shell, and the magnet is fixed on the first rotating housing and rotatable with the first rotating housing.

Further, the operating unit comprises a third shell and a second rotating housing provided on the third shell; and the operation detecting module comprises a rotating encoder that is fixed in the third shell; or, the operation detecting module comprises an angle sensor, the angle sensor being fixed on the second rotating housing.

Further, the operating unit comprises a fourth shell and a pushbutton provided on the fourth shell; the operation detecting module comprises a circuit board that is provided in the fourth shell; and a conductive elastic member is provided between the pushbutton and the circuit board, the conductive elastic member being deformable by pressing the pushbutton.

Further, the operating unit comprises an air chamber, the space in the air chamber space being compressible by pressing the air chamber; and the operation detecting module comprises an air pressure sensor that is provided in the air chamber.

Embodiments of the present disclosure further provide an electric lift mechanism, comprising: a lift platform, a lift actuating unit, and a variable-speed control arrangement, wherein the variable-speed control arrangement refers to the variable-speed control arrangement in any of the technical solutions above; the lift actuating unit comprises a motor and a lift pushrod; the motor refers to the motor in any of the technical solutions above; and the variable-speed control arrangement controls motor speed to vary telescoping speed of the lift pushrod.

Embodiments of the present disclosure further provide an electric massaging mechanism, comprising: a vibration motor and a variable-speed control arrangement, wherein the variable-speed control arrangement refers to the variable-speed control arrangement in any of the technical solutions above; the vibration motor refers to the motor in any of the technical solutions above; and the variable-speed control arrangement controls the vibration motor to vary vibration intensity and/or vibration frequency of the vibration motor.

With the above technical solutions, the present disclosure offers the following advantages:
1. The operation control unit is configured to detect an action variation quantity of the operating unit. As action variation quantities of the operating unit correspond to motor speeds, speed control becomes more intuitive. As the speed control is not restricted by limited gear positions, continuous speed variation is achieved. Further, due to elimination of a speed selector switch that would require matched control and detection ports, the product structure is simplified.
2. The pressure sensor and/or the angle sensor are provided, wherein the pressure sensor is configured to measure variation of the pressure against the stressed zone of the paddle, and the angle sensor is configured to measure variation of the pushed angle of the paddle. The information processing module processes such variations to obtain the corresponding motor speed variation quantity. The motor speed variation quantity is transmitted to the motor control module, and then motor speed variation is realized by pushing the paddle. In this way, motor speed control is intuitive.
3. The pressure sensor is optionally a piezoelectric transducer, or a piezoresistive transducer, or a conductive elastic member, deformation of the conductive elastic member resulting in change to the current or resistance, thereby enabling determination of gear position.
4. Rotating of the first rotating housing results in change to the relative position between the magnetically inductive sensor and the magnet; the rotated angle of the first rotating housing is determined by detecting the number of pulse signals; and the motor speed variation quantity is determined based on the rotated angle. As such, a simplified structure is achieved, and an accurate measurement is enabled.
5. The rotated angle of the second rotating housing is determined by the rotating encoder or the angle sensor, and the motor speed variation quantity is determined based on the rotated angle.
6. Pressing the pushbutton results in deformation of the conductive elastic member disposed between the pushbutton and the circuit board; the resulting area or thickness variation of the conductive elastic member results in variation of resistance value. The variation of resistance value is detected and fed back by a corresponding circuit on the circuit board, based on which the motor speed variation quantity is determined.
7. Pressing the air chamber results in space change in the air chamber; the space change in turn causes air pressure change in the air chamber. The motor speed variation quantity is determined based on the air pressure change.
8. The present disclosure further provides an electric lift mechanism, comprising a lift platform, a lift actuating unit, and a variable-speed control arrangement, wherein the variable-speed control arrangement refers to the variable-speed control arrangement in any of the technical solutions above, the variable-speed control arrangement enabling control of the motor speed based on the action variation quantity of the operating unit to thereby adjust telescoping speed of the lift pushrod. As such, the electric lift mechanism enables speed adjustment by manipulating the operating unit. In this way, speed adjustment becomes more intuitive, and the structure of electric lift mechanism is simplified.
9. The present disclosure further provides an electric massaging mechanism, comprising: a vibration motor and a variable-speed control arrangement, wherein the variable-speed control arrangement refers to the variable-speed control arrangement in any of the technical solutions above; the vibration motor refers to the motor in any of the technical solutions above. The variable-speed control arrangement enables control of the vibration motor based on the action variation quantity of the operating unit and thereby adjustment of the vibration intensity or vibration frequency of the vibration motor. As such, vibration of the electric massaging mechanism becomes more intuitive, and the structure of the electric massaging mechanism is simplified.

### BRIEF DESCRIPTION OF THE ACCOMPANYING DRAWINGS

Hereinafter, the present disclosure will be further illustrated with reference to the accompanying drawings:
Fig. 1 is a structural schematic diagram of a variable-speed control arrangement according to Embodiment 1 of the present disclosure.
Fig. 2 is a sectional view of the variable-speed control arrangement according to Embodiment 1 of the present disclosure.
Fig. 3 is a local enlarged view of the variable-speed control arrangement according to Embodiment 1 of the present disclosure.
Fig. 4 is a sectional view of a variable-speed control arrangement according to Embodiment 2 of the present disclosure.
Fig. 5 is a structural schematic diagram of a variable-speed control arrangement according to Embodiment 3 of the present disclosure.
Fig. 6 is a sectional view of the variable-speed control arrangement according to Embodiment 3 of the present disclosure.
Fig. 7 is a sectional view of a variable-speed control arrangement according to Embodiment 4 of the present disclosure.
Fig. 8 is a sectional view of a variable-speed control arrangement according to Embodiment 5 of the present disclosure.
Fig. 9 is a local enlarged view of the variable-speed control arrangement according to Embodiment 5 of the present disclosure.

### Reference Numerals:

110. First Shell; 120: Paddle; 121: Touch Switch; 130: Full Bridge Strain Gauge; 140: First Signal Processing Board; 150: Wire; 160: Conductive Elastic Member; 210: Second Shell; 230: Hall Sensor; 240: Ring Magnet; 250: Second Signal Processing Board; 310: Third Shell; 320: Second Rotating Housing; 330: Rotating Encoder; 340: Third Signal Processing Board; 410: Fourth Shell; 420: Pushbutton; 430: Circuit Board; 440. Conductive Rubber.

### DETAILED DESCRIPTION OF THE PREFERRED EMBODIMENTS

Hereinafter, the present disclosure will be described in further detail through preferred embodiments with reference to the accompanying drawings. It needs to be understood that the orientational or positional relationships indicated by the terms "upper," "lower," "left," "right," "longitudinal," "transverse," "inner," "outer," "vertical," "horizontal," "top," "bottom," etc. are orientational and positional relationships only based on the drawings, which are intended only for facilitating or simplifying description of the present disclosure, not for indicating or implying that the devices/elements have to possess such specific orientations or have to be constructed and operated with such specific orientations; therefore, they should not be understood as limitations to the present disclosure.

### Embodiment 1

Embodiments of the present disclosure provide a variable-speed control arrangement, comprising an operating unit and a control unit, the control unit comprising an information processing module, an operation detecting module, and a motor control module; the input end of the operation detecting module is electrically connected to the operating unit, the output end of the operation detecting module is electrically connected to the information processing module; the input end of the motor control module is electrically connected to the information processing module, and the output end of the motor control module is electrically connected to the motor; the operation detecting module detects an action variation quantity of the operating unit and transmits the detection result to the information processing module; the information processing module obtains a corresponding motor speed variation quantity based on the detection result and transmits the obtained motor speed variation quantity to the motor control module; the motor control module changes the motor speed based on the motor speed variation quantity . In this way, speed control becomes more intuitive. As the speed control is not restricted by limited gear positions, continuous speed variation is achieved. Further, due to elimination of a speed selector switch that would require matched control and detection ports, the product structure is simplified.

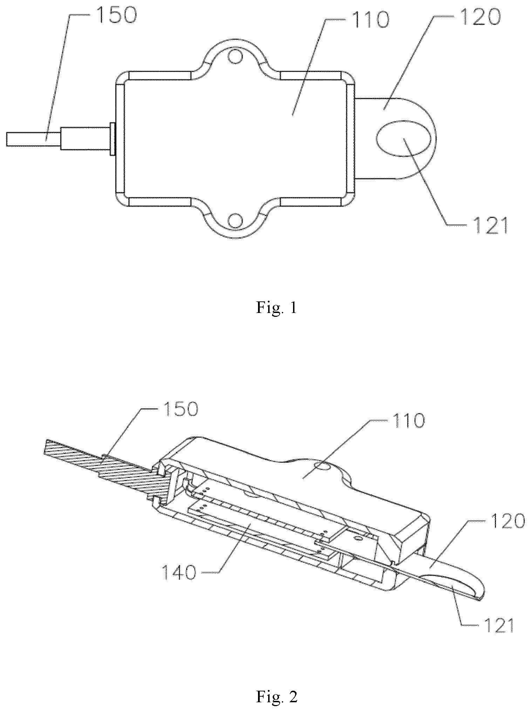

As shown in Figs. 1-3, in this embodiment, the operating unit comprises a first shell 110 and a paddle 120 provided on the first shell 110; the paddle 120 is made of fiberglass fabric based copper-clad laminate that is robust, resilient, endurable for and recoverable from long-term bending; the operation detecting module comprises a pressure sensor, the pressure sensor being disposed in a stressed zone of the paddle 120. The stressed zone of the paddle is generally arranged at the position of fitting with the first shell or the position where the paddle is fixed. The pressure sensor measures pressure variation in the stressed zone of the paddle; the information processing module obtains a corresponding motor speed variation quantity based on the pressure variation; motor speed variation is implemented by the motor control module based on the corresponding motor speed variation quantity; change of the motor speed is implemented by pushing the paddle 120. In this way, the motor speed is controlled in a more intuitive manner. The larger the force applied to push the paddle upward or downward, the higher the bend degree of the paddle, and correspondingly the higher rotary speed. The pressure sensor is optionally a piezoresistive transducer. In this embodiment, a full bridge strain gauge 130 is applied, which enables a better temperature compensation and an improved measurement accuracy. The full bridge strain gauge 130 is fixedly adhered to the paddle 120; when the paddle 120 is bent upwards or downwards, the full bridge strain gauge 130 is deformed to different extents to result in resistive value change; direction determination and signal amplification due to minor deformation are implemented by the subsequent circuit, and the motor speed variation quantity is obtained based on a preset correspondence between signal amplitude and speed.

The paddle 120 has a thickness of 1mm; the fiberglass fabric based copper-clad laminate with a thickness of or under 1mm has a good flexural hand feel and a good flexural deformation quantity and is quickly recoverable to the initial state.

The information processing module and the motor control module are integrated onto the first signal processing board 140. The first signal processing board 140 is disposed in the shell and electrically connected to the pressure sensor. As such, the operating unit and the control unit of the variable-speed control arrangement are integrated onto one component. The motor control module is connected to the motor via a wire 150 to thereby enable control of motor speed.

The control unit further comprises a safety detection module. In the case of failing to detect a safe release action, the safety detection module determines a careless operation, and the signal processing module does not process the detected data, thereby preventing carelessness and offering a higher safety and reliability for using the variable-speed control device.

In this embodiment, the safety detection module refers to a touch switch 121 on the paddle 120; when touch is detected by the touch switch to hold for a predetermined duration, the safety release action is actuated. In the case of failing to hold for a predetermined duration, the signal processing module does not process the detected data, and the pushing action of the paddle is invalid. In this way, careless operation on the paddle is prevented, offering a higher safety and reliability for using the variable-speed control arrangement. In an alternative embodiment, the touch switch 121 refers to a PCB touch pad.

Embodiments of the present disclosure further provides an electric lift mechanism, comprising a lift platform, a lift actuating unit, and a variable-speed control arrangement, the lift actuating unit driving the lift platform to move up and down; wherein the variable-speed control arrangement refers to the variable-speed control arrangement in any of the technical solutions above; the lift actuating unit includes a motor and a lift pushrod; the motor refers to the motor in any of the technical solutions above; wherein the variable-speed control arrangement enables control of the motor speed based on the action variation quantity of the operating unit to further adjust the telescoping speed of the lift pushrod. As such, the electric lift mechanism enables speed adjustment by manipulating the operating unit. In this way, speed adjustment becomes more intuitive, and the structure of the electric lift mechanism is simplified.

Embodiments of the present disclosure further provide an electric massaging mechanism, comprising: a vibration motor and a variable-speed control arrangement, wherein the variable-speed control arrangement refers to the variable-speed control arrangement in any of the technical solutions above; the vibration motor refers to the motor in any of the technical solutions above; and the variable-speed control arrangement controls rotary speed of the vibration motor to thereby change vibration intensity and vibration frequency of the vibration motor.

It will be appreciated that the paddle is alternatively a paper based copper-clad laminate or a metal based copper-clad laminate.

It will be appreciated that the operation detecting module is optionally an angle sensor such as an accelerometer or a gyroscope; the angle sensor is disposed on the follow-up surface of the paddle so as to sense the angle as the paddle is pulled upward or downward.

It will be appreciated that in an alternative embodiment, the operation detecting module simultaneously leverages a pressure sensor and an angle sensor, wherein the pressure sensor is provided in the stressed zone of the paddle, and the angle sensor is provided on the follow-up surface of the paddle.

It will be appreciated that the pressure sensor is optionally a piezoelectric transducer such as a piezoelectric thin film material, an annular or round piezoelectric plate.

It will be appreciated that the pressure sensor is optionally a piezoresistive transducer such as a single-bridge strain gauge or a half-bridge strain gauge.

It will be appreciated that the pressure sensor is optionally fixed to the paddle by embedding, fastening, suction, and bolt, etc.

It will be appreciated that the information processing module and the motor control module are optionally separately provided, and the operation detecting module is electrically connected to the signal processing module.

It will be appreciated that the safety detection module is optionally a pushbutton switch.

It will be appreciated that in an alternative embodiment, the variable-speed control arrangement is configured to separately change the vibration intensity of the vibration motor by controlling the rotary speed of the vibration motor.

It will be appreciated that in an alternative embodiment, the variable-speed control arrangement is configured to separately change the vibration frequency of the vibration motor by controlling the rotary speed of the vibration motor.

### Embodiment II

This embodiment differs from Embodiment I in that a different type of pressure sensor is used.

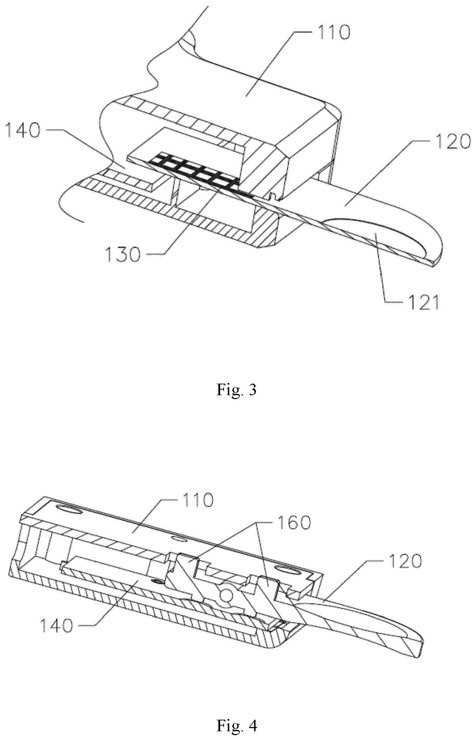

As shown in Fig. 4, the pressure sensor comprises a conductive elastic member 160, deformation of which results in resistance value change. By pushing the paddle 120, the conductive elastic member 160 is squeezed to deform. The larger the force applied to pull the paddle upward or downward, the greater the deformation of the conductive elastic member, and the higher the corresponding rotary speed. In an alternative embodiment, the conductive elastic member employs a conductive rubber.

It will be appreciated that in an alternative embodiment, the conductive elastic member employs a conductive sponge.

### Embodiment III

This embodiment differs from Embodiment I and Embodiment 2 in that the action variation quantity on the operating unit is an angle variation quantity.

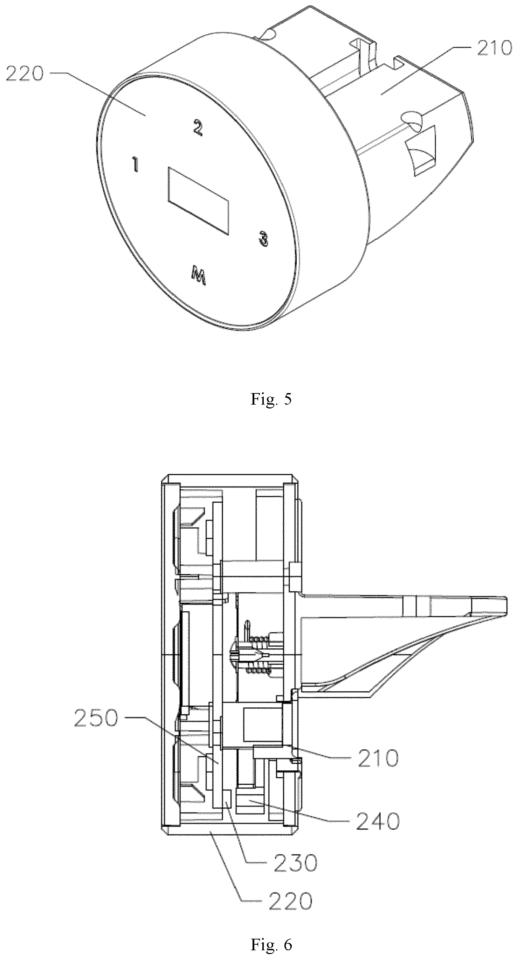

As shown in Fig. 5 and 6, the operating unit comprises a second shell 210 and a first rotating housing 220 provided on the second shell 210; the operation detecting module comprises a magnetically inductive sensor and a magnet. In an alternative embodiment, the magnetically inductive sensor employs a Hall sensor 230; the Hall sensor 230 is provided on the first rotating housing 220 and is rotatable with the first rotating housing 220; the magnet employs a ring magnet 240; the ring magnet 240 is fixed in the second housing 210. Rotating of the first rotating housing 220 results in change to relative position between the Hall sensor 230 and the ring magnet. Rotated angle of the first rotating housing 220 is determined based on the number of pulse signals detected, and then the motor speed variation quantity is determined. As such, the structure is simplified, and an accurate measurement is achieved.

The information processing module and the motor control module are integrated onto the second signal processing board 250, and the Hall sensor 230 is fixed on the second information processing board. It will be appreciated that in an alternative embodiment, the rotated angle of the first rotating housing is determined by detecting the output level amplitude of the Hall sensor.

It will be appreciated that the Hall sensor is securely fixed in the second shell, and the ring magnet is fixed onto the first rotating housing and is rotatable with the rotating housing.

It will be appreciated that in an alternative embodiment, the information processing module and the motor control module are separately provided, and the operation detecting module is electrically connected to the signal processing module.

It will be appreciated that in an alternative embodiment, the information processing module and the motor control module are separately provided, and the operation detecting module and the signal processing module are wireless connected.

### Embodiment IV

This embodiment differs from Embodiment III in that a different type of operation detecting module is used.

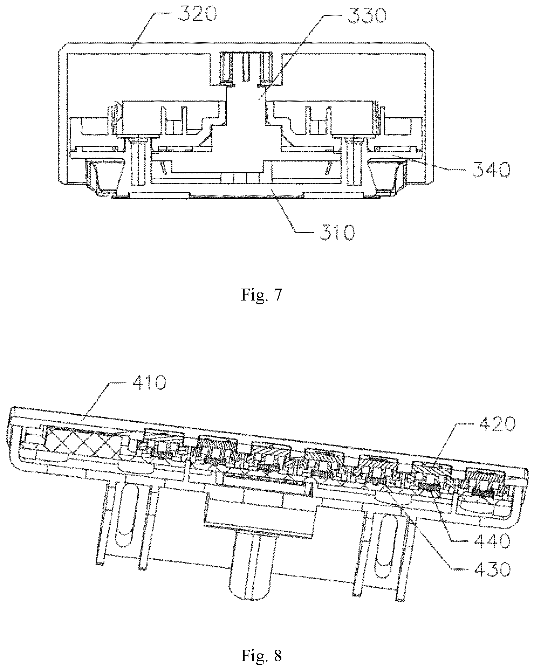

As shown in Fig. 7, the operating unit comprises a third shell 310 and a second rotating housing 320 provided on the third shell 310; the operation detecting module comprises a rotating encoder 330, wherein the rotating encoder 330 is fixed in the third shell 310. The rotating encoder 330 detects the rotated angle of the second rotating housing 320 by detecting the number of pulse signals and then determines the motor speed variation quantity.

The information processing module and the motor control module are integrated onto the third signal processing board 340, and the rotating encoder 330 is also fixed on the third information processing board. 340

It will be appreciated that in an alternative embodiment, the operation detecting module refers to a rotated angle sensor, the rotated angle sensor being fixed on the second rotating housing.

It will be appreciated that in an alternative embodiment, the operation detecting module refers to a grating sensor; in this application scenario, the second rotating housing generally includes a bearing.

It will be appreciated that in an alternative embodiment, the information processing module and the motor control module are separately provided, and the operation detecting module is electrically connected to the signal processing module.

It will be appreciated that in an alternative embodiment, the information processing module and the motor control module are separately provided, and the operation detecting module and the signal processing module are wireless connected.

### Embodiment V

This embodiment differs from the previous embodiments in that the action variation quantity on the operating unit refers to a resistance variation quantity.

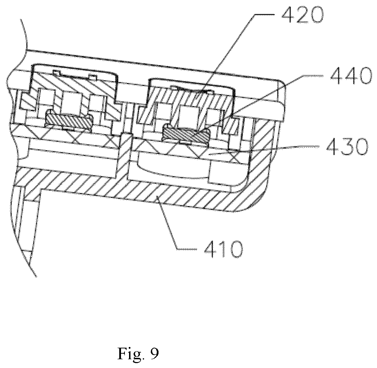

As shown in Figs. 8 and 9, the operating unit comprises a fourth shell 410 and a pushbutton 420 provided on the fourth shell 410; the operation detecting module comprises a circuit board 430 that is provided in the fourth shell 410; a conductive elastic member is provided between the pushbutton 420 and the circuit board 430. Pressing the pushbutton 420 results in deformation of the conductive elastic member. The resulting area or thickness variation of the conductive elastic member results in variation of resistance value. The variation of resistance value is detected and fed back by a corresponding circuit on the circuit board 430, based on which the motor speed variation quantity is determined.

In this embodiment, the conductive elastic member refers to a conductive rubber 440; Pressing the pushbutton 420 results in deformation of the conductive rubber 440.

It will be appreciated that in an alternative embodiment, the conductive elastic member refers to a conductive sponge.

### Embodiment VI

This embodiment differs from the previous embodiments in that the action variation quantity of the operating unit is an air pressure variation quantity.

The operating unit comprises an air chamber. Space in the air chamber is compressible by pressing the air chamber, while compressed air chamber results in variation of the air pressure. The operation detecting module comprises an air pressure sensor that is provided in the air chamber. The motor speed variation quantity is determined based on the air pressure variation quantity detected in the air chamber. The air chamber is automatically recoverable to the initial position when it is not pressed.

### Embodiment VII

This embodiment differs from the previous embodiments in that the action variation quantity of the operating unit is a touch length.

The operating unit comprises a touch slide; the operation detecting module comprises a touch sensor; in an alternative embodiment, the motor speed variation quantity is determined based on slid length variation quantity detected of the touch slide.

It will be appreciated that in an alternative embodiment, the touch slide refers to a ring slip.

Besides the preferred embodiments above, the present disclosure also has other embodiments. Those skilled in the art may make various variations and alternations based on the present disclosure, and such variations and alterations should fall within the scope defined by the appended claims without departing from the spirit of the present disclosure.

## Claims

1. A variable-speed control arrangement, comprising: an operating unit and a control unit, wherein the control unit includes an information processing module, an operation detecting module electrically connected to the operating unit, and a motor control module electrically connected to the motor, the operation detecting module and the motor control module being electrically connected to the information processing module; the operation detecting module detects an action variation quantity of the operating unit and transmits the detection result to the information processing module; the information processing module obtains a corresponding motor speed variation quantity based on the detection result and transmits the obtained motor speed variation quantity to the motor control module; and the motor control module changes the motor speed based on the motor speed variation quantity .

2. The variable-speed control arrangement according to claim 1, wherein the operating unit comprises a first shell and a paddle provided on the first shell; and the operation detecting module comprises a pressure sensor provided in a stressed zone of the paddle and/or an angle sensor provided on a follow-up surface of the paddle.

3. The variable-speed control arrangement according to claim 2, wherein the pressure sensor is a piezoelectric transducer; or, the pressure sensor is a piezoresistive transducer; or, the pressure sensor comprises an conductive elastic member, wherein deformation of the conductive elastic member results in a change to resistive value.

4. The variable-speed control arrangement according to claim 2, wherein the information processing module and the motor control module are integrated onto a first signal processing board, the first signal processing board being provided in the first shell and electrically connected to the pressure sensor.

5. The variable-speed control arrangement according to claim 1, wherein the operating unit comprises a second shell and a first rotating housing provided on the second shell; the operation detecting module comprises a magnetically inductive sensor and a magnet, wherein the magnetically inductive sensor is provided on the first rotating housing and rotatable with the first rotating housing, and the magnet is fixed in the second shell; or, the magnetically inductive sensor is fixed in the second shell, and the magnet is fixed on the first rotating housing and rotatable with the first rotating housing.

6. The variable-speed control arrangement according to claim 1, wherein the operating unit comprises a third shell and a second rotating housing provided on the third shell; and the operation detecting module comprises a rotating encoder that is fixed in the third shell; or, the operation detecting module comprises an angle sensor, the angle sensor being fixed on the second rotating housing.

7. The variable-speed control arrangement according to claim 1, wherein the operating unit comprises a fourth shell and a pushbutton provided on the fourth shell; the operation detecting module comprises a circuit board that is provided in the fourth shell; and a conductive elastic member is provided between the pushbutton and the circuit board, the conductive elastic member being deformable by pressing the pushbutton.

8. The variable-speed control arrangement according to claim 1, wherein the operating unit comprises an air chamber, the space in the air chamber space being compressible by pressing the air chamber; and the operation detecting module comprises an air pressure sensor that is provided in the air chamber.

9. An electric lift mechanism, comprising: a lift platform, a lift actuating unit, and a variable-speed control arrangement, wherein the variable-speed control arrangement refers to the variable-speed control arrangement according to any of claims 1-8; the lift actuating unit comprises a motor and a lift pushrod; the motor refers to the motor according to any of claims 1-8; and the variable-speed control arrangement controls motor speed to vary telescoping speed of the lift pushrod.

10. An electric massaging mechanism, comprising: a vibration motor and a variable-speed control arrangement, wherein the variable-speed control arrangement refers to the variable-speed control arrangement according to any of claims 1-8; the vibration motor refers to the motor according to any of claims 1-8; and the variable-speed control arrangement controls the vibration motor to vary vibration intensity and/or vibration frequency of the vibration motor.
